# EUROPEAN PATENT APPLICATION

(11) **EP 4 390 122 A1**
(43) Date of publication of application: **26.06.2024**
(21) Application number: 22315333.9
(22) Date of filing: 19.12.2022
(51) Int. Cl.: F03D 17/00

(54) **EQUIPMENT FOR INSPECTING WIND TURBINES OF AN OFFSHORE WIND FARM AND ASSOCIATED METHOD**

(71) Applicant: TotalEnergies OneTech, 92400 Courbevoie (FR)
(72) Inventor: Clement, Guillaume, 92400 Courbevoie (FR); Raboin, Jean-Christophe, 92400 Courbevoie (FR)
(74) Representative: Innovincia

(57) **Abstract**

The present invention refers to an equipment for inspecting wind turbines (T1...T16) of an offshore wind farm (11) comprising:
- a drone docking station (3),
- a drone (1) associated with the docking station (3) and equipped with an inspection device (5),
wherein the drone (1) is configured for flying from the drone docking station (3) to a selected wind turbine (T1...T16) of the offshore wind farm (11) using a first positioning device (1b) and for inspecting the selected wind turbine (T1...T16) based on a second positioning device (1c) different than the first positioning device (1b).

## Description

### Background of the invention

The field of the present invention refers to offshore wind farm and in particular to the inspection of the wind turbines of the offshore wind farm.

The number of implemented offshore wind farms is growing due to the different advantages provided by these offshore wind farms such as the amount of produced renewable energy due to winds that are generally stronger and more regular than inland winds. Furthermore, offshore wind farms are usually located away from the coast and do not degrade the landscape and are therefore more accepted by the population. Such offshore wind farms usually cover a very large area as the wind turbines need to be spaced from each other of several hundreds of meters to avoid disturbances between the wind turbines and to optimize the energy production of the wind farm.

Even when located offshore, the wind turbines undergo large mechanical constraints or shocks due to waves or flying elements hitting the blades or the mast of the wind turbines that may lead to degradations of the wind turbine. In order to ensure the correct functioning of the wind turbines over time, it is important to detect such degradations in order to fix them before a complete failure of the wind turbine.

As a consequence, regular inspections of the wind turbines need to be achieved to detect any degradation undergone by the wind turbines and to decide if a maintenance needs to be done. However, such inspections are difficult due to the size of the wind turbines (in general several tens of meters), the size of the wind farms (several squared kilometers) and the difficulty to access to the different wind turbines due to weather conditions and distance from the shore. The present invention aims therefore at providing a solution to ease and reduce the costs associated with the inspection of the wind turbines of an offshore wind farm.

### Summary of the invention

The present invention refers to an equipment for inspecting wind turbines of an offshore wind farm comprising:
- a drone docking station,
- a flying drone associated with the docking station and equipped with an inspection device, wherein the drone is configured for flying from the drone docking station to a selected wind turbine of the offshore wind farm using a first positioning device and for inspecting the selected wind turbine based on a second positioning device different than the first positioning device.

Such features enable an automatic inspection of the wind turbines of an offshore wind farm without requiring the assistance of technicians on site next to the inspected wind turbine.

According to another aspect of the invention, the first positioning device refers to a global positioning system "GPS" or to an inertial unit comprising a plurality of sensors such as accelerometers and gyroscopes and the second positioning device is based on a light detection and ranging "LIDAR" technology.

According to another aspect of the invention, the drone comprises means for determining the position of the blades of the selected wind turbine and means for identifying the said blades.

According to another aspect of the invention, a radio-frequency identification "RFID" tag is integrated in at least one of the blades and the means for identifying the blades comprise a radio-frequency identification "RFID" reader.

According to another aspect of the invention, the docking station is located on a service offshore vessel or on a wind turbine of the offshore wind farm or on an electric substation of the offshore wind farm.

According to another aspect of the invention, the inspection device is at least one device from the following list:
- a camera or video recorder,
- a thermal imaging camera,
- a lightning receiver testing device,
- an ultrasonic transceiver.

According to another aspect of the invention, several drones are associated with a common docking station.

According to another aspect of the invention, the drone is configured to fly back to the docking station when its battery power level is below a predetermined threshold.

According to another aspect of the present invention, the docking station comprises a processing unit and wherein the drone and the docking station comprises complementary connection means configured for transferring data acquired by the inspection device to the processing unit of the docking station.

The present invention also to a method for inspecting wind turbines of an offshore wind farm comprising the following steps:
- flying a drone from an associated drone docking station located in a predetermined area of the offshore wind farm to a selected wind turbine using a first positioning device,
- inspecting the selected wind turbine with an inspection device of the drone using a second positioning device different than the first positioning device.

According to another aspect of the invention, the inspection step comprises the displacement of the drone around the wind turbine according to a predetermined path and the orientation of the inspection device of the drone towards predetermined locations of the wind turbine.

According to another aspect of the invention, the method also comprises the following steps:
- flying the drone back to the docking station at the end of the inspection step
- transferring data acquired by the inspection device to a processing unit of the drone docking station.

### Brief description of the drawings

[Fig.1] is a diagram of an equipment for inspecting wind turbines of an offshore wind farm;
[Fig.2] is a diagram of an offshore wind farm;
[Fig.3] is a diagram of an offshore wind turbine;
[Fig.4] is a flowchart of the different steps of a method for inspecting wind turbines.

### Detailed description of the invention

The following achievements are examples. Although, the specification refers to one or several embodiments, it does not imply that each reference refers to the same embodiment or that the features apply only to a single embodiment. Simple features of different embodiments can also be combined to provide other embodiments.

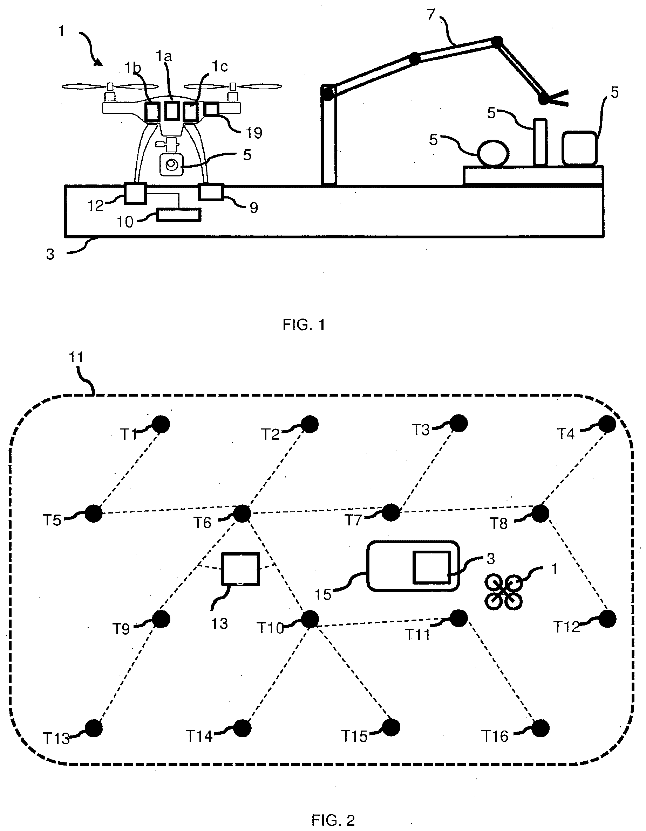

Fig.1 represents a diagram of an equipment for inspecting wind turbines of an offshore wind farm comprising a flying drone 1, also called unmanned aerial vehicle (UAV), and a docking station 3 configured for receiving the flying drone 1.

The drone 1 is equipped with an inspection device 5 such as a camera or video recorder, a thermal imaging camera, a lightning receiver testing device, an ultrasonic transceiver or any device useful for inspecting wind turbines. The inspection device 5 may be an interchangeable device and the docking station 3 may comprise a collection of inspection devices 5 and an interchanging tool 7 configured for fastening a selected inspection device 5 to the drone 1.

The drone 1 may be equipped with a first inspection device 5 such as a camera to achieve a coarse inspection to detect surface defaults of a wind turbine and then with a second inspection device 5 such as an ultrasonic transceiver to achieve a more accurate or deeper inspection to assess the damages associated with the detected surface defaults of the wind turbine.

The docking station 3 may also comprise a charging unit 9 configured for charging a battery 1a of the drone 1. Several drones 1 may be associated with a single docking station 3. The different drones 1 may achieve simultaneous inspections or may use different inspection devices in order to achieve a complete inspection of a wind turbine in a minimum amount of time.

The docking station 3 may also comprise a processing unit 10 and connection means 12 configured for connecting a memory of the inspection device 5 or a memory of the drone 1 to the processing device. Such connection means may refer to a wire connection, for example using complementary connectors between the drone 1 and the docking station 3, for example between a plug of the drone 1 and a port of the docking station 3. In such case, the charging unit 9 may also use the wire connection for charging a battery 1a of the drone 1. Alternatively, the connection means 12 may refer to wireless communication means such as a Bluetooth ^{®} or a wireless fidelity (WIFI ^{™}) connection.

The drone 1 is also equipped with a first positioning device 1b such as a global positioning system (GPS) chip or other positioning device enabling the drone 1 to flight from the docking station 3 to a selected wind turbine (for example based on beacons distributed within the offshore wind farm or an inertial unit comprising a set of accelerometers and gyroscopes) which may be located several kilometers away from the docking station 3. The drone 1 also comprises a second positioning device 1c such as a light detection and ranging (LIDAR) transceiver or other positioning device enabling to detect a position of the blades of a wind turbine such as a radio detection and ranging (RADAR) transceiver.

Fig.2 represents a diagram of an example of an offshore wind farm 11 comprising 16 wind turbines noted T1, T2...T16. The wind turbines T1...T16 are distributed within the offshore wind farm 11 area and spaced apart from each other of a predetermined distance. A wind turbine T1...T16 is for example located at least one kilometer away from the other wind turbines T1...T16.

The offshore wind farm 11 may also comprise an electric substation 13 configured for gathering the electric power provided by at least some of the wind turbines T1...T16. The offshore wind farm 11 may comprise several electric substations 13. The electric substation 13 may be located within a wind turbine T1...T16.

The offshore wind farm 11 may also comprise a service offshore vessel 15 comprising a crew dedicated to the operation and the maintenance of the offshore wind farm 11.

The drone docking station 3 may be located either on a wind turbine T1...T16, for example on a platform attached to the mast of a wind turbine or on the electric substation 13 or on the service offshore vessel 15 as represented in Fig.2 or on any equipment of the offshore wind farm 11 adapted for receiving the drone docking station 3.

When an inspection of a selected wind turbine T1...T16, for example the wind turbine T12, is launched, the drone 1 is equipped with a selected inspection device 5. An inspection may be launched automatically at a predetermined day and time and/or when the weather conditions enable such inspection for example when the wind speed is lower than a predetermined threshold, or when the required conditions are met after the predetermined day and time are reached.

The drone 1 is configured for flying from the drone docking station 3 to the selected wind turbine T12 of the offshore wind farm 11 using the first positioning device 1b, for example a GPS chip. The GPS coordinates of the different wind turbines T1...T16 and in particular the GPS coordinates of the selected wind turbine T12 may be saved in a memory of the drone 1. The drone 1 may also be configured for determining the GPS coordinates of the docking station 3 when the drone 1 takes off from the docking station 3 to be able to fly back to the docking station 3 at the end of the inspection. Alternatively, the drone 1 may comprise wireless communication means such as radio communication means to communicate with the docking station 3 for retrieving the GPS coordinates of the docking station 3 when the drone 1 has to fly back to the docking station 3.

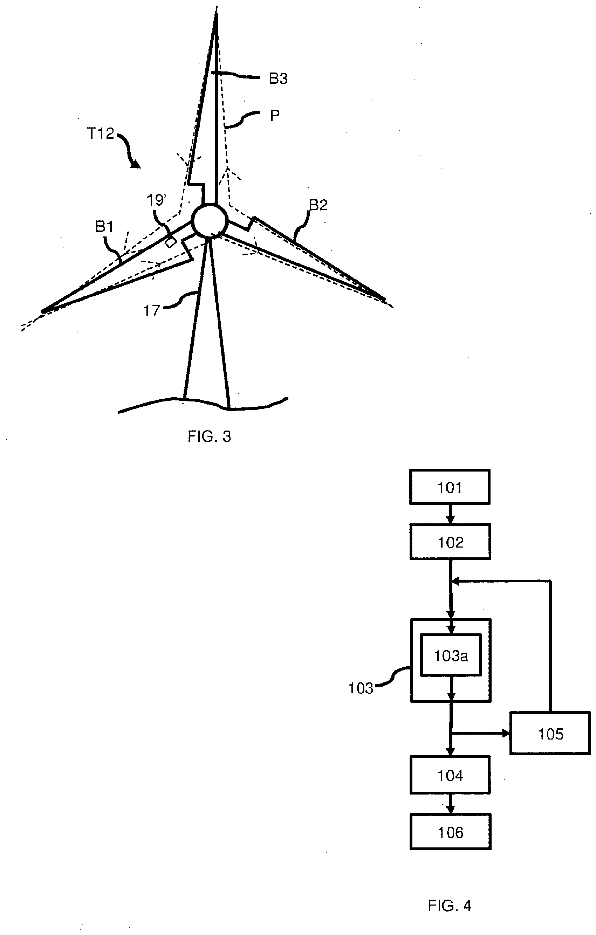

Fig.3 represents a diagram of the selected wind turbine T12. In the present example, the selected wind turbine T12 comprises a mast 17 and three blades noted B1, B2 and B3.

When reaching the location of the selected wind turbine T12 (in practice when arriving in the vicinity of the selected wind turbine T12 corresponding to the range of the second positioning device 1c, for example a few tens of meters around the selected wind turbine T12), the drone 1 is also configured for inspecting the selected wind turbine T12 based on the second positioning device 1c such as a LIDAR transceiver. Preferably, this second positioning device 1c is a positioning device which is relative to the selected wind turbine T12, that is to say, a positioning device that detects an element of the selected wind turbine T12 such as a radar or lidar. Indeed, the selected wind turbine T12 may only be moored to the sea floor and may therefore move with respect to a terrestrial referential. The movement is however limited to a few centimeters or a few meters.

Before the inspection, the drone 1 may also be configured to determine the position of the blades B1, B2 and B3 and to identify the different blades. The determination of the position of the different blades B1, B2, B3 may be achieved using the lidar transceiver or via a dedicated system such as the use of beacons positioned on the different blades B1, B2, B3 or any other suitable technique. The identification of the different blades B1, B2, B3 may be achieved using a radiofrequency identification (RFID) reader 19 integrated in the drone 1 or fastened to the drone 1 and the implementation of one or several RFID tags 19' integrated in respectively one or several blades B1, B2, B3. Any other suitable methods, for example the use of a marker on the blades B1, B2, B3 that can be identified by the drone 1 may also be used.

In the example, a single RFID tag 19' may be integrated in the blade B1 so that the drone 1 can identify the position of the blade B1 and then may deduce the positions of the blade B2 and B3 from the position of the blade B1. Alternatively, the selected wind turbine T12 may be configured for positioning its blades B1, B2 and B3 in a predetermined position during an inspection.

During the inspection, the drone 1 may be configured to follow a predetermined path such as the path P represented in Fig.3 to fly over predetermined inspection points. The drone 1 may also be configured for directing its inspection device 5, for example a camera, towards the location of predetermined inspection points when flying over the said inspection points. In Fig.3, the path P is represented only on one side of the blades B1, B2, B3 but the path may cover both sides of each blade B1, B2 and B3 or only a part of one or several blades B1, B2, B3. The path P may also cover the mast 17 of the selected wind turbine T12. The pictures or measurements taken during the inspection by the inspection device 5 are saved in a memory, either a memory of the inspection device 5 itself or a memory of the drone 1.

At the end of the inspection, the drone 1 may be configured to fly back to the docking station 3. Alternatively, the drone 1 may be configured to fly to another selected wind turbine T1... T16 such as the wind turbine T11 to inspect the said wind turbine T11.

The drone 1 may also be configured for monitoring its battery level and to fly back to the docking station 3 when its battery power level drops below a predetermined threshold. The predetermined threshold may be dependent of the distance between the drone 1 and the docking station 3. Such distance between the drone 1 and the docking station 3 may be determined based on the GPS positions of the drone 1 and the docking station 3.

When the drone 1 flies back to the docking station 3, the drone 1 may be configured to establish a connection with the processing unit 10 of the docking station 3 via the connection means 12 to transfer the data associated with the inspection, in particular the pictures or the measurements made by the inspection device 5, and saved in a memory of the drone 1 (the memory may be integrated in the inspection device 5) towards the processing unit 10 of the docking station 3. The transferred data may then be transmitted by the processing unit 9 of the docking station towards a remote server or a remote computer.

Furthermore, the interchanging tool 7 may be configured to exchange the inspection device 5 fastened to the drone 1. The camera is for example replaced by an ultrasonic transceiver or a thermal camera and the drone 1 may be sent back (possibly after a charge of the battery 1a or batteries of the drone 1) to the selected wind turbine T12 to assess more precisely some damages detected with the camera or to achieve a different type of inspection. Alternatively, a second drone 1 carrying an inspection device different from a camera is sent to the location for which additional inspection is foreseen. This second drone 1 may either leave the same docking station 3 as drone 1, or a second docking station 3.

As indicated previously, the inspection device 5 may also be a lightning receiver testing device. Indeed, the offshore wind turbine T1...T16 are highly exposed to lightnings due to their location and their geometry. They are therefore equipped with equipment to avoid electrical damages due to lightnings. However, such equipment may be damaged, notably if the wind turbine T1..:T16 is hit by a lightning. It may therefore be necessary to check that the lightning receiver equipment works properly. The drone 1 may therefore be equipped with a lightning receiver testing device to achieve such checking.

The damages or events that may be searched during an inspection may be comprised in the following list:
- a laminate damage on the surface of a blade B1...B3 or a surface of the mast 17,
- an oil leak, for example from the bearings of the wind turbine T1...T16,
- an appearance of erosion (the level of erosion: beginning of erosion or advanced erosion may be determined),
- scratches on the paint,
- appearance of cavity or fibers exposure,
- shell cracking, paint peeling or coating damages,
- lightning impact,
- pinhole
- radial crack on bondline (notably when the blades are made of two shells attached together (for example glued together), the bondline referring to the border or edge between both shells) or longitudinal crack on bondline or edge,
- bondline failure.

Thus, the use of a drone 1 equipped with an inspection device 5 and comprising a first positioning device 1b suitable for guiding the drone 1 from the docking station 3 which can be anywhere within the offshore wind farm 11 that may cover several square kilometers to a selected wind turbine T12 requiring an inspection and a second positioning device 1c suitable for guiding the drone 1 along a predetermined path P around the selected wind turbine T12 enables achieving automatic inspections of offshore wind turbines T1...T16. Such solution avoids the need for a dedicated boat and crew to navigate to the selected wind turbine T12 which is expensive, time consuming and may be dangerous in some cases. Furthermore, such solution is more flexible as it does not require a complete crew to achieve the inspection. An inspection may therefore be launched as soon as the weather conditions are favorable.

The present invention also refers to a method for inspecting wind turbines T1...T16 of an offshore wind farm 11 using a drone 1 and an associated docking station 3 as described previously.

Fig.4 is a flowchart of the different steps of such method.

The first step 101 refers to the selection of an inspection device 5 and the fastening of the selected inspection device 5 to the drone 1. Such fastening may be achieved by an interchanging tool 7 comprising for example an articulated arm as represented in Fig.1. This first step 101 may be optional if the selected inspection device 5 is already fastened to the drone 1. Several inspection devices 5 may also be fastened to the drone 1 if the inspection devices 5 are light enough to be carried by the drone 1.

The second step 102 refers to flying the drone 1 from the drone docking station 3 which is located for example on a service offshore vessel 15 which may be positioned in the offshore wind farm 11 area for example in the middle of the offshore wind farm 11 to a selected wind turbine T1...T16, for example the wind turbine T12. The drone 1 uses a first positioning device 1b such as a GPS chip to find the way to the selected wind turbine T12.

The third step 103 refers to inspecting the selected wind turbine T12 using the inspection device(s) 5 of the drone 1. During the inspection, the drone 1 uses a second positioning device 1c different than the first positioning device 1b, for example a LIDAR transceiver.

The third step 103 may comprise a sub-step 103A wherein the drone 1 is configured for determining the position of the blades B1, B2, B3 of the selected wind turbine T12 and the identification of the different blades B1, B2 and B3. Indeed, in case of detecting damages on a blade B1 or B2 or B3, it may be important to know which blade B1 or B2 or B3 is damaged in order to organize a maintenance or a fixing of the blade. Such determination of the position of the blades B1, B2, B3 may be done with the second positioning device 1c and the identification may be done by an RFID reader 19 and an RFID tag 19' integrated in at least one of the blades B1, B2, B3.

If the inspection device 5 is a camera, the inspection may refer to a video recording of predetermined locations of the selected wind turbine T12 such as locations along a predetermined path. The drone 1 is therefore configured for following a predetermined path such as the path P represented in Fig.3 using its LIDAR transceiver 1c and for directing its inspection device 5 towards the predetermined locations. Other types of inspection may be carried out with other inspection devices 5.

After the inspection of the third step 103 is completed, the drone 1 may either go to a fourth step 104 or to a fifth step 105.

The fourth step 104 refers to flying the drone 1 back to the docking station 3 using the first positioning device 1b, the GPS chip in the present case.

The sixth step 106 refers to a data transfer towards the docking station 3. When the drone 1 is returned to the docking station 3, the images or measurements made by the inspection device 5 may be transferred to a processing unit 10 via connection means 12 to be analyzed or to be transmitted to a remote device such as a remote server. The connection means 12 refer to a wire connection (the drone 1 may then be configured for plugging a connector of the drone 1 to a complementary port of the docking station 3 or a cable of the docking station 3 may be plugged to the done 1 by a technician) or to a wireless connection such as a Bluetooth ^{®} or a WIFI ^{™} connection. The battery 1a of the drone 1 may also be charged (or replaced by a charged battery) and the different steps described previously may be achieved again using a different inspection device 5 or on a different selected wind turbine T1...T16.

Alternatively, the drone 1 may fly directly to another selected wind turbine, for example the wind turbine T11 (without flying back to the docking station 3) in a fifth step 105. The drone 1 uses its first positioning device 1b to find a path to the wind turbine T11. The drone 1 may then apply the inspection step 103 described previously to the wind turbine T11. The drone 1 may then inspect several selected wind turbines T1...T16 until all the selected wind turbines T1...T16 are inspected or until its battery power level drops below a predetermined threshold.

Thus, thanks to the proposed method, offshore wind turbines may be easily and automatically inspected to detect damages on the different parts of the wind turbines without requiring the presence on site (at the wind turbine) of a dedicated boat with technicians. The cost of an inspection is therefore greatly reduced. The inspection may also be launched as soon as weather conditions are acceptable for the drone 1 to fly.

## Claims

1. Equipment for inspecting wind turbines (T1...T16) of an offshore wind farm (11) comprising:
- a drone docking station (3),
- a drone (1) associated with the docking station (3) and equipped with an inspection device (5),
wherein the drone (1) is configured for flying from the drone docking station (3) to a selected wind turbine (T1...T16) of the offshore wind farm (11) using a first positioning device (1b) and for inspecting the selected wind turbine (T1...T16) based on a second positioning device (1c) different than the first positioning device (1b).

2. Equipment in accordance with the previous claim wherein the first positioning device (1b) refers to a global positioning system "GPS" or an inertial unit and the second positioning device (1c) is based on a light detection and ranging "LIDAR" technology.

3. Equipment in accordance with one of the previous claims wherein the drone (1) comprises means for determining the position of the blades (B1, B2, B3) of the selected wind turbine (T1...T16) and means for identifying the said blades (B1, B2, B3).

4. Equipment in accordance with the previous claim wherein a radio-frequency identification "RFID" tag (19') is integrated in at least one of the blades (B1, B2, B3) and wherein the means for identifying the blades (B1, B2, B3) comprise a radiofrequency identification "RFID" reader (19).

5. Equipment in accordance with one the previous claims wherein the docking station (3) is located on a service offshore vessel (15) or on a wind turbine (T1...T16) of the offshore wind farm (11) or on an electric substation (13) of the offshore wind farm (11).

6. Equipment in accordance with one of the previous claims wherein the inspection device (5) is at least one device from the following list:
- a camera or video recorder,
- a thermal imaging camera,
- a lightning receiver testing device,
- an ultrasonic transceiver.

7. Equipment in accordance with one of the previous claims wherein several drones (1) are associated with a common docking station (3).

8. Equipment in accordance with one of the previous claims wherein the drone (1) is configured to fly back to the docking station (3) when its battery power level is below a predetermined threshold.

9. Equipment in accordance with one of the previous claims wherein the docking station (3) comprises a processing unit (10) and wherein the drone (1) and the docking station (3) comprises complementary connection means (12) configured for transferring data acquired by the inspection device (5) to the processing unit (10) of the docking station.

10. Method for inspecting wind turbines (T1...T16) of an offshore wind farm (11) comprising the following steps:
- flying (102) a drone (1) from an associated drone docking station (3) located in a predetermined area of the offshore wind farm (11) to a selected wind turbine (T1...T16) using a first positioning device (1b),
- inspecting (103) the selected wind turbine (T1...T16) with an inspection device (5) of the drone (1) using a second positioning device (1c) different than the first positioning device (1b).

11. Method in accordance with claim 10 wherein the inspection step (103) comprises the displacement of the drone (1) around the wind turbine (T1...T16) according to a predetermined path (P) and the orientation of the inspection device (5) of the drone (1) towards predetermined locations of the wind turbine (T1...T16).

12. Method in accordance with claim 10 or 11 also comprising the following steps:
- flying (104) the drone (1) back to the docking station (3) at the end of the inspection step (103)
- transferring (105) data acquired by the inspection device (5) to a processing unit of the drone docking station (3).
